# FASCICULE DE BREVET EUROPEEN

(11) **EP 0 531 201 B1**
(45) Date de publication et mention de la délivrance du brevet: **28.12.1994**
(21) Numéro de dépôt: 92402383.1
(22) Date de dépôt: 02.09.1992
(51) Int. Cl.: B60J 1/02, B60J 10/02, B60J 1/10

(54) **Montage d'un vitrage automobile du côté intérieur**
Von Innenseite montierte Kraftfahrzeugverglasung
Assembling of motor vehicle glazing from inside

(30) Priorité: 02.09.1991 DE 4129052
(43) Date de publication de la demande: 10.03.1993
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Ohlenforst, Hans, W-5100 Aachen (DE); Cornils, Gerd, W-5161 Merzenich 2 (DE)
(74) Mandataire: Breton, Jean-Claude

(56) Documents cités:
- EP-A- 0 307 317
- EP-A- 0 312 496

## Description

L'invention concerne une fenêtre pour véhicule comportant une tôle de fixation faisant partie du cadre de fenêtre de la carrosserie du véhicule et un vitrage collé à la tôle de fixation par l'intermédiaire d'un cordon de colle, le vitrage étant doté d'un cadre ou d'un barreau profilé en forme de cadre en polymère coopérant avec la tôle de fixation.

Une fenêtre pour véhicule présentant ces caractéristiques est par exemple connue d'après le document EP-A-0 307 317. Dans le cas de cette fenêtre connue pour véhicule, le vitrage est posé dans le cadre de fenêtre depuis l'extérieur de la carrosserie du véhicule. L'élément profilé en forme de cadre coopérant avec la tôle de fixation est disposé sur la face du vitrage qui est tournée vers l'intérieur du véhicule et présente une partie en saillie qui chevauche le côté intérieur, tourné vers l'ouverture de la fenêtre, de la tôle de fixation. Le cordon de colle est placé à l'extérieur de cette partie chevauchant la tôle de fixation, c'est-à-dire entre celle-ci et le bord périphérique du vitrage. Pour protéger la colle des rayons ultraviolets qui entraînent une fragilisation de la colle, un encadrement formé d'une couche opaque de peinture fixée par cuisson est disposé sur la face du vitrage tournée du côté de la tôle de fixation. Cette couche en forme de cadre a également pour fonction d'empêcher que la zone collée soit visible de l'extérieur à travers le vitrage.

La fenêtre pour véhicule selon l'invention se distingue des fenêtres pour véhicule connues en ce que la partie du cadre ou du barreau profilé en forme de cadre, coopérant avec la tôle de fixation, et le cordon de colle sont disposés du côté du vitrage tourné vers l'extérieur de la carrosserie du véhicule, et en ce que le vitrage est collé au côté de la tôle de fixation qui est tourné vers l'intérieur du véhicule, tandis que le cordon de colle est disposé le long du cadre profilé ou du barreau profilé en forme de cadre coopérant avec la tôle de fixation.

Selon l'invention, ce mode de montage d'une fenêtre de véhicule entraîne une série d'avantages substantiels par rapport aux fenêtres pour véhicule connues. Tout d'abord, l'application sur le vitrage d'une couche empêchant le passage des rayons ultraviolets devient superflue, car cette fonction est, dans la fenêtre selon l'invention, reprise par la tôle de fixation elle-même. Cela non seulement signifie une simplification substantielle du procédé de fabrication du vitrage, mais également a pour conséquence une amélioration de l'efficacité de la protection, car les couches de protection imprimées et fixées par cuisson n'offrent pas toujours une protection absolue contre les rayons ultraviolets. Un autre avantage réside en ce que le domaine de la périphérie extérieure du vitrage, qui souvent présente, du fait du procédé de fabrication du vitrage, des déformations qui, bien que petites, restent visibles pour des yeux critiques, est maintenant recouvert de l'extérieur par la tôle de fixation et n'est donc plus visible. Il est alors possible de recourir, pour la fabrication des vitrages, à des procédés ayant pour conséquences inévitables des déformations périphériques plus importantes, mais qui en revanche présentent d'autres avantages, et en particulier des avantages économiques. Comme le bord du vitrage, c'est-à-dire sa surface périphérique, se trouve à l'intérieur du véhicule et peut être recouvert par l'habillage intérieur du véhicule, les surfaces périphériques ne doivent, en outre, plus être rodées ou polies. En outre, et au contraire des procédés de montage habituels, les dimensions des vitrages sont moins critiques, de sorte que la plage de tolérance des dimensions des vitrages peut être augmentée, ce qui, à nouveau, a pour conséquence une amélioration sur le plan économique. Enfin, le procédé de montage selon l'invention permet de doter les vitrages, sur leur face intérieure, d'une couche conductrice transparente servant d'antenne, sans que, comme dans les fenêtres de véhicule connues avec couche conductrice de l'électricité située à l'intérieur, cette couche soit défavorablement influencée par la colle réalisant la jonction à la tôle métallique.

Tous les vitrages destinés à être montés dans des véhicules sont compatibles avec la technique de l'invention. C'est aussi bien vrai pour les vitrages monolithiques, trempés ou non, pour les vitrages feuilletés avec une intercalaires thermoplastique que pour les vitrages dits "bilayer" constitués d'une feuille de verre extérieure revêtue sur sa face interne d'une ou plusieurs feuilles de plastique.

Dans ce cas le collage du vitrage se fait directement sur la surface du verre, ce qui constitue un problème bien connu et évite d'avoir à se poser la question difficile de l'adhérence sur la feuille plastique.

D'autres développements opportuns de l'invention ressortent des revendications dépendantes et de la description ci-dessous, de différents exemples de réalisation, donnée avec référence aux dessins.

Dans les dessins, et chaque fois sous la forme d'une coupe perpendiculaire à travers le domaine périphérique supérieur de la fenêtre :
- la fig. 1 représente une fenêtre pour véhicule selon l'invention, dans sa forme de réalisation la plus simple,
- la fig. 2 représente une fenêtre pour véhicule avec un vitrage monolithique et un cadre en forme de U en coupe transversale entourant le bord du vitrage,
- la fig. 3 représente une fenêtre pour véhicule comportant un vitrage en verre feuilleté dont le bord est diminué par un gradin et un cadre profilé adhérant d'un côté au vitrage, et
- la fig. 4 représente un vitrage comportant un cadre profilé adhérant d'un côté au vitrage, et un câble de montage supplémentaire.

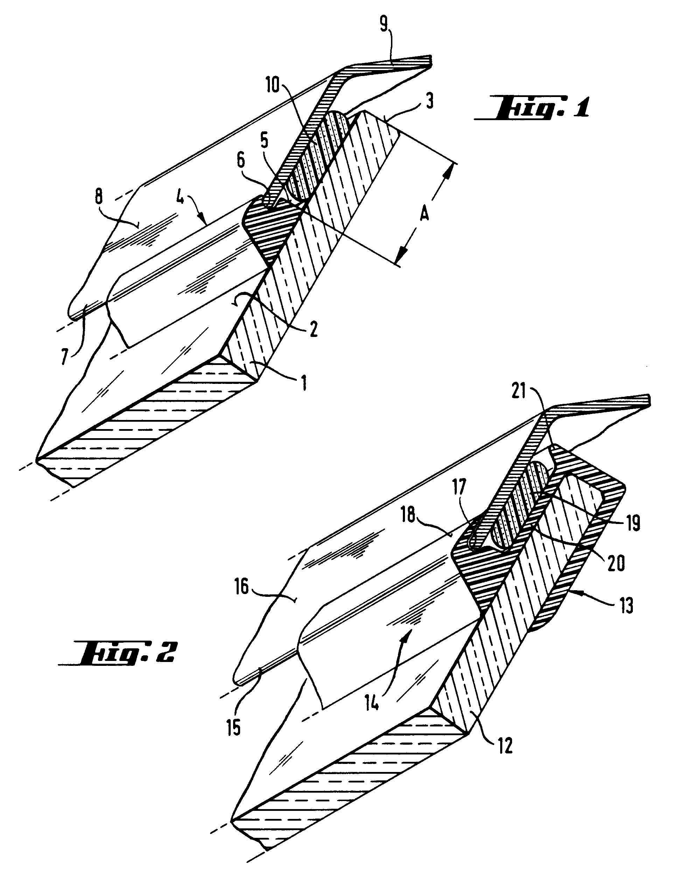

Dans la forme de réalisation représentée sur la fig. 1, la fenêtre pour véhicule est dotée d'un vitrage 1 monolithique en verre de sécurité trempé. Au lieu de cela, le vitrage 1 peut évidemment être constitué d'un vitrage de sécurité feuilleté. Sur la surface 2, tournée vers l'extérieur, du vitrage 1, un barreau profilé 4 est disposé parallèlement à la surface périphérique 3, à une distance A de celle-ci. Le barreau profilé 4 est polymérisé et collé à demeure sur la surface du verre.

Le barreau profilé 4 est fabriqué par extrusion directe sur la surface du verre d'un polymère extrudable approprié et adhérant au vitrage. Cette technique d'extrusion et les matières polymères convenant à cette technique sont connues. A cet effet, conviennent en particulier comme matériaux des prépolymères de polyuréthane à un composant sous forme pâteuse, qui après extrusion durcissent sous l'influence de l'humidité de l'air pour fournir des élastomères à haut module d'élasticité. De tels complexes de polyuréthane sont décrits dans US-A-3 779 794. Des complexes de polyuréthane correspondants, à deux composants, peuvent également être utilisés, par exemple des complexes d'adhésif tels que ceux décrits dans la demande de brevet européen EP-A-O O83 797 ou dans le brevet européen EP-B-0 024 501. Des élastomères thermoplastiques peuvent également être utilisés dans ce but, par exemple, certains types du produit "SANTOPRENE" de la Société Monsanto. Suivant la matière adhésive utilisée, la surface de verre sur laquelle le barreau polymérique est extrudé à l'aide d'une buse d'extrusion appropriée doit être prétraitée de manière appropriée et dotée d'une couche d'accrochage correspondante.

L'extrusion du barreau profilé 4 s'effectue à l'aide d'une tête d'extrusion présentant une buse d'extrusion, la tête d'extrusion étant conduite le long du bord du vitrage, à une distance constante de la surface périphérique 3, à l'aide d'un robot programmé de manière appropriée ou d'une autre machine à commande programmée.

Le barreau profilé 4, qui en principe présente une section transversale quelconque, est doté d'une rainure d'accrochage 6 dans sa surface 5 tournée vers le bord périphérique 3 du vitrage 1. Dans cette rainure d'accrochage 6 s'insère le bord 7 de la tôle de fixation 8 qui forme une partie du cadre de la fenêtre. La tôle de fixation 8 se fond, dans la forme de réalisation représentée, dans la tôle extérieure 9 de la carrosserie du véhicule ; en revanche, elle peut cependant également être une partie du cadre de fenêtre indépendante de la tôle extérieure.

Lors du montage du vitrage dans le véhicule, le barreau profilé 4 doit être durci. Pour cette raison, il est opportunément installé sur le vitrage 1 déjà dans les ateliers du fournisseur de verre, ou éventuellement au cours d'une opération ultérieure de finition.

En vue de la fixation du vitrage 1 pourvu de son cadre profilé 4 sur la carrosserie d'un véhicule, le vitrage 1 est doté d'un cordon de colle 10 de montage sur sa surface 2, dans l'espace situé entre le cadre profilé 4 et le bord périphérique 3. Le vitrage 1 ainsi préparé est alors repoussé avec son cordon de colle 10 contre la tôle de fixation 8 depuis l'intérieur du véhicule. Grâce à ses propriétés caoutchoutiques, le cadre profilé 4 traverse la baie de fenêtre dans la carrosserie, le long du bord 7 de la tôle de fixation 8, de sorte que la rainure d'accrochage 6 forme une liaison à épousement de forme et transfert de force avec le bord 7 de la tôle de fixation 8. Le vitrage 1 est ainsi fixé en sa position. Le cordon de colle 10 peut alors durcir.

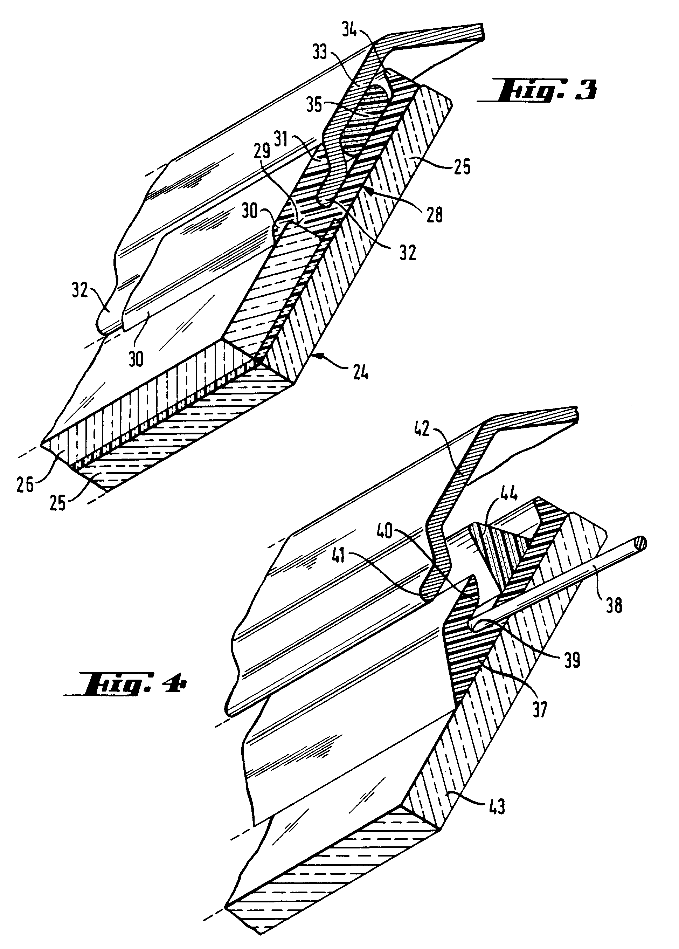

Dans la forme de réalisation représentée sur la Fig. 2, la fenêtre est à nouveau formée d'un vitrage de sécurité 12 monolithique. Le vitrage 12 est entouré à sa périphérie d'un cadre profilé de section en U 13 en polymère durci. La fabrication de tels vitrages entourés d'un cadre profilé en U s'effectue dans un procédé de moulage sous pression (technique RIM) recourant, pour le cadre profilé, en particulier à des complexes de polyuréthane à deux composants ou à des mélanges de PVC.

Sur la face du vitrage tournée vers l'extérieur, le cadre profilé 13 est doté d'une section profilée 14 qui déborde dans la baie de fenêtre et coopère avec le bord 15 de la tôle de fixation 16. Le cadre profilé 13 présente à nouveau une rainure d'accrochage 17 dans laquelle s'insère le bord 15 de la tôle de fixation. En outre, la section profilée 14 est dotée d'une lèvre 18 qui s'applique sur la tôle de fixation 16. Le cordon de colle de montage est situé entre la tôle de fixation 16 et l'aile 20 du cadre profilé 13 qui présente encore une nervure saillante 21 sur sa face tournée vers la tôle de fixation 16. Cette nervure 21 sert d'arrêt pour la matière adhésive du cordon de colle 19.

Une forme de réalisation avec un vitrage de sécurité feuilleté 24 est représentée sur la Fig. 3. Dans ce cas, la feuille de verre 25 tournée vers l'habitacle présente de plus grandes dimensions en surface que la feuille de verre 26 tournée vers l'extérieur, de sorte que le vitrage feuilleté présente un bord diminué par un gradin. Sur la partie périphérique débordante de la feuille de verre intérieure 25 est installé, par exemple par collage ou par extrusion, le cadre profilé 28 en élastomère. Le cadre profilé 28 se raccorde étroitement à la surface périphérique 29 de la feuille de verre 26 plus petite, tournée vers l'extérieur, et chevauche cette feuille de verre au moyen d'une lèvre 30. Le cadre profilé 28 est, en outre, doté d'une autre lèvre 31 qui recouvre la zone extrême 32, coudée, de la tôle de fixation 33. A nouveau, la nervure d'arrêt 34 du cadre profilé 28 a pour rôle d'empêcher que la matière adhésive du cordon de colle 35 de montage ne dépasse pas le bord du vitrage.

D'autres configurations font également partie du domaine de l'invention. C'est ainsi qu'il est possible que le bord de la tôle de fixation s'approche au plus près de la surface extérieure du vitrage et que le cadre profilé, rigide au moment de la pose, se trouve au voisinage du bord extérieur du vitrage tandis que le cordon de colle le longe, de son côté intérieur.

Pour faciliter le montage d'un vitrage tel que décrit dans les exemples de réalisation, on peut insérer, comme représenté à la Fig. 4, un câble dans la rainure de montage 39 du cadre profilé 37. Le câble de montage 38, qui se trouve dans la rainure 39 en dessous de la lèvre 40, sert à tirer la lèvre 40 par dessus la partie extrême 41, coudée, de la bride de fixation 42, lorsque le vitrage 43, qui a préalablement été doté du cordon de colle de montage 44, est pressé contre la bride de fixation 42.

## Revendications

1. Fenêtre pour véhicule comportant une tôle de fixation (8; 16; 33; 42) faisant partie du cadre de fenêtre de la carrosserie du véhicule et un vitrage collé à la tôle de fixation par l'intermédiaire d'un cordon de colle (10; 19; 35; 44), le vitrage étant doté d'un cadre ou d'un barreau profité en forme de cadre (4; 13; 28; 37), en matériau polymérique, présentant une partie coopérant avec la tôle de fixation, caractérisée en ce que la partie du cadre ou du barreau profilé en forme de cadre (4; 13; 28; 37), coopérant avec la tôle de fixation (8; 16; 33; 42), et le cordon de colle (10; 19; 35; 44) sont disposés du côte du vitrage (1; 12; 24; 43) tourné vers l'extérieur de la carrosserie du véhicule, et en ce que le vitrage (1; 12; 24; 43) est collé au côté de la tôle de fixation (8; 16; 33; 42) qui est tourné vers l'intérieur du véhicule, tandis que le cordon de colle (10; 19; 35; 44) est disposé le long du cadre profilé (4; 13; 28; 37) coopérant avec la tôle de fixation (8; 16; 33; 42) à la périphérie du vitrage (1; 12; 24; 43).

2. Fenêtre pour véhicule selon la revendication 1, caractérisée en ce que la partie du cadre ou du barreau profilé (4) en forme de cadre, coopérant avec la tôle de fixation (8) présente une rainure d'accrochage (6) coopérant avec le bord libre (7) de la tôle de fixation (8).

3. Fenêtre pour véhicule selon la revendication 1 ou 2, caractérisée en ce que le cadre ou le barreau profilé en forme de cadre (13; 28; 37) coopérant avec la tôle de fixation (16; 33; 42) présente une lèvre (18; 31; 40) chevauchant la face extérieure de la tôle de fixation (16; 33; 42).

4. Fenêtre pour véhicule selon l'une des revendications 1 à 3, caractérisée en ce que le cadre (13) ou le barreau profilé en forme de cadre présente une section transversale en forme de U enserrant la partie périphérique (12) du vitrage.

5. Fenêtre pour véhicule selon la revendication 4, caractérisée en ce que le cadre (13) enserrant la partie périphérique du vitrage (12) est fabriqué, suivant le procédé de moulage sous pression, par moulage sous pression directement sur le bord du vitrage (12).

6. Fenêtre pour véhicule selon l'une des revendications 1 à 3, caractérisée en ce que le cadre ou le barreau profilé en forme de cadre (4; 28; 37) est fabriqué par extrusion directe sur la surface du verre d'un polymère extrudable adhérant à la surface du verre.

7. Fenêtre pour véhicule selon l'une des revendications 1 à 6, caractérisée en ce que le cadre ou le barreau profilé (13; 28; 37) en forme de cadre est doté, dans sa partie voisine de la surface périphérique du vitrage (12; 25; 43), d'une nervure d'arrêt (21; 34) tournée vers la tôle de fixation (16; 33), pour le cordon de colle de montage (19; 35).

8. Fenêtre pour véhicule selon l'une des revendications 1 à 7, caractérisée en ce que le vitrage (24) est un vitrage en verre feuilleté dont le bord est diminué par un gradin, la feuille de verre (26) de dimensions plus petites, étant disposée du côté extérieur du véhicule et le cadre profilé ou le barreau profilé (28) étant disposé sur la partie débordante du bord de la feuille de verre intérieure (25).

9. Fenêtre pour véhicule selon l'une des revendications 1 à 8, caractérisé en ce que dans la rainure (39) coopérant avec le bord (41) de la tôle de fixation (42) est inséré un câble (38) facilitant le montage du vitrage (43).

## Claims

1. Window for vehicle, comprising a mounting flange (8; 16; 33; 42) forming a part of the window frame of the vehicle bodywork and a glazing bonded to the fixing plate by means of an adhesive cord (10; 19; 35; 44), the pane being equipped with a frame or a frame-shaped profiled spacer (4; 13; 28; 37) of polymeric material, having a part cooperating with the mounting flange, characterized in that the part of the frame or frame-shaped profiled spacer (4; 13; 28; 37) cooperating with the mounting flange (8; 16; 33; 42) and the adhesive cord (10; 19; 35; 44) are disposed on the side of the glazing (1; 12; 24; 43) which is towards the exterior of the vehicle body, and in that the glazing (1; 12; 24; 43) is glued to the side of the mounting flange (8; 16; 33; 42) which is towards the interior of the vehicle, whereas the adhesive cord (10; 19; 35; 44) is disposed along the profiled frame (4; 13; 28; 37) cooperating with the mounting flange (8; 16; 33; 42) at the periphery of the glazing (1; 12; 24; 43).

2. Window for vehicle according to claim 1, characterized in that the part of the frame or frame-shaped profiled spacer (4) cooperating with the mounting flange (8) has a locking rebate (6) cooperating with the free edge (7) of the mounting flange (8).

3. Window for vehicle according to claim 1 or 2, characterized in that the frame or the frame-shaped profiled spacer (13; 28; 37) cooperating with the mounting flange (16; 33; 42) has a lip (18; 31; 40) overlapping the external face of the mounting flange (16; 33; 42).

4. Window for vehicle according to one of claims 1 to 3, characterized in that the frame (13) or the frame-shaped profiled spacer has a U-shaped cross-section encompassing the peripheral part (12) of the glazing.

5. Window for vehicle according to claim 4, characterized in that the frame (13) encompassing the peripheral part of the glazing (12) is produced, in accordance with an injection moulding process, by injection moulding directly onto the edge of the glazing (12).

6. Window for vehicle according to one of claims 1 to 3, characterized in that the frame or the frame-shaped profiled spacer (4; 28; 37) is produced by direct extrusion onto the surface of the glass of an extrudable polymer adhering to the surface of the glass.

7. Window for vehicle according to one of claims 1 to 6, characterized in that the frame or the frame-shaped profiled spacer (13; 28; 37) is equipped, in its portion adjacent to the peripheral surface of the glazing (12; 25; 43) with a retaining beading (21; 34) facing towards the fixing plate (16; 33) for the installation adhesive cord (19; 35).

8. Window for vehicle according to one of claims 1 to 7, characterized in that the glazing (24) is a pane of laminated glass with a stepped edge construction, the glass sheet (26) of smaller dimensions being disposed on the side external to the vehicle and the profiled frame or profiled spacer (28) being disposed on the projecting part of the edge of the inner glass sheet (25).

9. Window for vehicle according to one of claims 1 to 8, characterized in that a cable (38), facilitating the installation of the glazing (43), is inserted into the rebate (39) cooperating with the edge (41) of the mounting flange (42).

## Patentansprüche

1. Fahrzeugfenster mit einem einen Teil des Fensterrahmens der Fahrzeugkarosserie bildenden Befestigungsflansch (8;16;33;42) und einer mit dem Befestigungsflansch über einen Kleberstrang (10;19;35;44) verklebten Glasscheibe, die mit einem einen mit dem Befestigungsflansch zusammenwirkenden Teil aufweisenden Rahmen oder rahmenartigen Profilstrang (4;13;28;37) aus einem Polymer versehen r a low3;28;37) aus einem Polymer versehen ist, **dadurch gekennzeichnet**, daß der mit dem Befestigungsflansch (8;16;33;42) zusammenwirkende Teil des Rahmens oder des rahmenartigen Profilstrangs (4;13;28;37) und der Kleberstrang (10;19;35;44) auf der zur Außenseite der Fahrzeugkarosserie gerichteten Oberfläche der Glasscheibe (1;12;24;43) angeordnet und die Glasscheibe (1;12;24;43) auf der zum Fahrzeuginnern hin gerichteten Seite des Befestigungsflansches (8;16;33;42) mit diesem verklebt ist, wobei der Kleberstrang (10;19;35;44) entlang den mit dem Befestigungsflansch (8;16;33;42) zusammenwirkenden Profilrahmen (4;13;28;37) am Scheibenumfang (1;12;24;43) angeordnet ist.

2. Fahrzeugfenster nach Anspruch 1, dadurch gekennzeichnet, daß der mit dem Befestigungsflansch (8) zusammenwirkende Teil des Rahmens oder des rahmenartigen Profilstrangs (4) eine mit der freien Kante (7) des Befestigungsflansches (8) zusammenwirkende Rastnut (6) aufweist.

3. Fahrzeugfenster nach Anspruch 1 oder 2, dadurch gekennzeichnet, daß der mit dem Befestigungsflansch (16;33;42) zusammenwirkende Rahmen oder rahmenartige Profilstrang (13;28;37) eine die Außenseite des Befestigungsflansches (16;33;42) übergreifende Lippe (18;31;40) aufweist.

4. Fahrzeugfenster nach einem der Ansprüche 1 bis 3, dadurch gekennzeichnet, daß der Rahmen (13) oder der rahmenartige Profilstrang einen den Randbereich (12) der Glasscheibe übergreifenden U-förmigen Querschnitt aufweist.

5. Fahrzeugfenster nach Anspruch 4, dadurch gekennzeichnet, daß der den Randbereich der Glasscheibe (12) übergreifende Rahmen (13) nach dem Spritzgießverfahren durch Spritzgießformung unmittelbar auf dem Rand der Glasscheibe (12) hergestellt ist.

6. Fahrzeugfenster nach einem der Ansprüche 1 bis 3, dadurch gekennzeichnet, daß der Rahmen oder der rahmenartige Profilstrang (4;28;37) durch Extrusion eines auf der Glasoberfläche haftenden extrudierfähigen Polymers unmittelbar auf der Glasoberfläche hergestellt ist.

7. Fahrzeugfenster nach einem der Ansprüche 1 bis 6, dadurch gekennzeichnet, daß der Rahmen oder der rahmenartige Profilstrang (13;28;37) in dem der Umfangsfläche der Glasscheibe (12;25;43) benachbarten Bereich mit einem auf den Befestigungsflansch (16;33) gerichteten Begrenzungssteg (21;34) für den Montagekleberstrang (19;35) versehen ist.

8. Fahrzeugfenster nach einem der Ansprüche 1 bis 7, dadurch gekennzeichnet, daß die Glasscheibe (24) eine am Rand stufenförmig ausgebildete Verbundglasscheibe ist, wobei die Einzelglasscheibe (26) mit den kleineren Abmessungen zur Außenseite des Fahrzeugs gerichtet und der Profilrahmen bzw. der Profilstrang (28) auf dem überstehenden Randbereich der inneren Glasscheibe (25) angeordnet ist.

9. Fahrzeugfenster nach einem der Ansprüche 1 bis 8, dadurch gekennzeichnet, daß in die mit dem Kantenbereich (41) des Befestigungsflansches (42) zusammenwirkende Nut (39) eine den Einbau der Glasscheibe (43) erleichternde Schnur (38) eingelegt ist.
